(19) Europäisches Patentamt / European Patent Office / Office européen des brevets

(11) **EP 2 843 439 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(51) Int Cl.:
*G01S 13/90* *(2006.01)*      *G01S 13/00* *(2006.01)*

(21) Anmeldenummer: **14178361.3**

(22) Anmeldetag: **24.07.2014**

(54) **Verfahren zur Korrektur der Zeit- und Phasenreferenzen von nicht-synchronen SAR-Daten**

Method for correcting the time and phase references of asynchronous SAR data

Procédé de correction de références de phase et de temps de données SAR non synchrones

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2013 DE 102013214676**

(43) Veröffentlichungstag der Anmeldung:
**04.03.2015 Patentblatt 2015/10**

(73) Patentinhaber: **Deutsches Zentrum für Luft- und Raumfahrt e.V.**
**51147 Köln (DE)**

(72) Erfinder:
- **Rodriguez-Cassola, Marc**
  **80768 München (DE)**
- **Prats-Iraola, Pau**
  **82205 Gilching (DE)**
- **Krieger, Gerhard**
  **82131 Gauting (DE)**
- **Moreira, Alberto**
  **82140 Olching (DE)**

(74) Vertreter: **Fink Numrich**
**Patentanwälte**
**European Patent and Trademark Attorneys**
**Wendl-Dietrich-Straße 14**
**D-80634 München (DE)**

(56) Entgegenhaltungen:
**WO-A2-00/52492**

- MARC RODRIGUEZ-CASSOLA ET AL: "General Processing Approach for Bistatic SAR Systems: Descrip- tion and Performance Analysis", 8TH EUROPEAN CONFERENCE ON SYNTHETIC APERTURE RADAR, 10. Juni 2010 (2010-06-10), Seiten 1-4, XP055164514, Aachen, Germany ISBN: 978-3-80-073272-2
- MARC RODRIGUEZ-CASSOLA ET AL: "New processing approach and results for bistatic TerraSAR-X/F-SAR spaceborne-airborne experiments", GEOSCIENCE AND REMOTE SENSING SYMPOSIUM,2009 IEEE INTERNATIONAL,IGARSS 2009, IEEE, PISCATAWAY, NJ, USA, 12. Juli 2009 (2009-07-12), Seiten II-242, XP031631443, ISBN: 978-1-4244-3394-0
- WEN-QIN WANG: "GPS-Based Time&Phase Synchronization Processing for Distributed SAR", IEEE TRANSACTIONS ON AEROSPACE AND ELECTRONIC SYSTEMS, IEEE SERVICE CENTER, PISCATAWAY, NJ, US, Bd. 45, Nr. 3, 1. Juli 2009 (2009-07-01), Seiten 1040-1051, XP011277350, ISSN: 0018-9251, DOI: 10.1109/TAES.2009.5259181
- Wen-Qin Wang: "4 Bistatic Synthetic Aperture Radar Synchronization Processing", Radar Technology, 1. Januar 2010 (2010-01-01), Seiten 273-296, XP055164519, ISBN: 978-9-53-307029-2 Gefunden im Internet: URL:http://cdn.intechopen.com/pdfs-wm/6893 . pdf [gefunden am 2015-01-23]

EP 2 843 439 B1

- THOMAS ESPETER ET AL: "Progress of Hybrid Bistatic SAR: Synchronization Experiments and First Imaging Results", SYNTHETIC APERTURE RADAR (EUSAR), 2008 7TH EUROPEAN CONFERENCE ON, 5. Juni 2008 (2008-06-05), Seiten 1-4, XP055164563, ISBN: 978-3-80-073084-7

- JIANSONG DING ET AL: "High efficiency echo data acquire approach for bistatic SAR", GEOSCIENCE AND REMOTE SENSING SYMPOSIUM (IGARSS), 2012 IEEE INTERNATIONAL, IEEE, 22. Juli 2012 (2012-07-22), Seiten 1-4, XP032341319, DOI: 10.1109/IGARSS.2012.6479595 ISBN: 978-1-4673-1160-1

**Beschreibung**

Die Erfindung betrifft ein Verfahren zur Korrektur der Zeit- und Phasenfehler von nicht-synchronen SAR-Daten. Die nicht-synchronen SAR-Daten sind als Bild oder Bilder durch ein bistatisches oder ein multistatisches Radarsystem erfasst und bereitgestellt.

SAR (Synthetic Aperture Radar)-Systeme ermöglichen die Fernerkundung der Erdoberfläche für die Erfassung von an der Erdoberfläche reflektierten Radarpulsen, welche von dem SAR-System ausgesendet werden, das sich auf einer Plattform mit konstanter Geschwindigkeit über der Erdoberfläche bewegt. Bei einem solchen System macht man sich die Erkenntnis zunutze, dass aufgrund der bewegten Plattform die gleichen Bereiche der Erde in unterschiedlichen Positionen erfasst werden, wodurch eine Amplituden-Phaseninformation und schließlich ein Radarbild der Erdoberfläche erhalten werden kann.

Das SAR-System (nachfolgend auch als Satellit bezeichnet) bewegt sich in einer Richtung, welche als Azimut-Richtung bezeichnet wird. Der Satellit, dessen Höhe über der Erdoberfläche bekannt ist, sendet während seiner Bewegung in Azimut-Richtung kontinuierlich Radarpulse über eine Sendeantenne in Richtung zur Erdoberfläche aus. Von jedem ausgesendeten Radarpuls wird das Radarecho erfasst, indem die an der Erdoberfläche reflektierte Radarstrahlung in der sog. Range-Richtung, welche sich senkrecht zur Flugrichtung oder Azimut-Richtung des Satelliten erstreckt, mit einem Empfänger zeitlich abgetastet wird.

Als Folge erhält man eine Vielzahl von Abtastungen, wobei jede Abtastung dem Radarecho eines bestimmten Radarpulses und einer Range-Position entspricht. Die Zuordnung einer Abtastung zu einem Radarpuls wird dabei durch eine Azimut-Position repräsentiert. Der Sender und der Empfänger sind dabei z.B. Bestandteil einer kombinierten Sende-Empfangsantenne, welche im Sendebetrieb den Sender und im Empfangsbetrieb den Empfänger darstellt. In diesem Fall handelt es sich bei dem SAR-System um ein sog. Einzel-Apertur-System, bei dem die Radarechos nur durch einen einzelnen Empfänger, d.h. nicht gleichzeitig durch mehrere Empfänger, erfasst werden.

Bei der Auswertung werden nur Informationen der Radarstrahlung innerhalb eines von dem ausgesendeten Radarpuls beleuchteten Bodenstreifens (englisch: Swath) erfasst, der eine Breite von mehreren Kilometern, z.B. einige zehn oder hundert Kilometer, aufweisen kann. Die Breite des Bodenstreifens ist unter anderem von der Länge des Zeitfensters abhängig, innerhalb dem die rückgestreuten Radarechos von einem ausgesendeten Impuls durch den Empfänger empfangen werden. Dieses Zeitfenster wird als Echofenster bezeichnet. Die empfangenen Echos werden in ihrer Frequenz konvertiert (d.h. gemischt), demoduliert, digitalisiert und in einer zweidimensionalen Matrix als Rohdaten gespeichert.

Das Prinzip der SAR-Messung beruht nunmehr darauf, dass jeweilige Punkte auf der Erdoberfläche mehrfach aus unterschiedlichen Blickwinkeln aufgrund der Bewegung des Satelliten erfasst werden. Aufgrund des bekannten Doppler-Effekts kommt es bei der Erfassung des Radarechos zu einer Phasenmodulation, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus SAR-Daten ist dem Fachmann bekannt und wird deshalb nicht weiter im Detail erläutert. Mit dem SAR-Verfahren wird durch eine Vielzahl von Radarpulsen eines Radarsenders kleiner Apertur eine größere synthetische Apertur entsprechend der Ausdehnung des Radarpulses auf der Erdoberfläche simuliert.

Um als Range-Doppler-Radar genutzt werden zu können, bei dem die Range-Bandbreite zur Erzielung einer räumlichen Auflösung in Range-Richtung (sog. across-track-direction) genutzt wird, wird die kohärente Natur eines SAR-Systems genutzt. In ähnlicher Weise führt die Bewegung der Plattform in Flugrichtung zu einer Doppler-Signatur, welche dazu verwendet werden kann, die räumliche Auflösung in Azimut-Richtung (d.h. in der sog. along-track-direction) zu erzielen.

Im Kontext von SAR ist zwischen punktförmigen Rückstreuern und verteilten Rückstreuern zu unterscheiden. Das Radarecho eines Punkt-Streuers ist dominant innerhalb einer Auflösungszelle. Zwei unterschiedliche SAR-Datenerfassungen werden als kohärent betrachtet, wenn die daraus resultierenden SAR-Bilder ein gemeinsames Band des "Szenespektrums" abtasten.

Die SAR-Bildgebung basiert auf der Annahme, dass die Reflektivität eines komplexen kohärenten Rückstreuers rekonstruiert werden kann, wenn seine geometrische Position bekannt ist. Aus diesem Grund müssen zwei Bedingungen erfüllt sein, sodass die Rekonstruktion des Radarsignals genau ist: a) die komplexe Reflektivität des Rückstreuers muss so unverzerrt wie möglich aufgenommen werden, und b) seine geometrische Position muss innerhalb der erfassten Daten ermittelbar sein. Die zweite Bedingung ist dabei nur dann erfüllt, wenn der Sender und der Empfänger eine gemeinsame Zeit- und Phasen-Referenz teilen. Eine gemeinsame Zeit- und Phasen-Referenz ist nur dann gegeben, wenn der Sender und der Empfänger grundsätzlich eine gleiche Uhren- oder Zeitreferenz verwenden, was bei sog. monostatischen SAR-Systemen der Fall ist. Demgegenüber arbeiten bistatische und multistatische SAR-Systeme üblicherweise mit unterschiedlichen Zeitreferenzen (Master Clocks) bei Sender und Empfänger. Die Frequenzdifferenz dieser Zeitreferenzen skaliert sich auf die Betriebsfrequenzen der Radarelektronik, wodurch die absolute Zeit- und Phasen-referenz des Systems verloren geht.

Der Betrieb eines nicht-synchronen Radarsystems kann auf kooperative oder nichtkooperative Weise erfolgen. Bei einem kooperativen, nicht-synchronen Radarsystem tauschen Sender und Empfänger eine Information über ihre Master-Frequenz aus. In nicht-kooperativen, nicht-synchronen SAR-Systemen arbeiten Sender und Empfänger unabhängig voneinander. Demzufolge findet keine Synchronisation der Zeitreferenz und damit der Referenzfrequenz auf direktem Wege statt. In der folgenden Beschreibung ist somit unter einem nicht-synchronem SAR-System ein nichtkooperatives bistatisches SAR-System oder ein kooperatives bistatisches Radar-System mit erheblichen residuellen Taktphasenfehlern zu verstehen.

Die Kalibrierung eines nicht-synchronen SAR-Systems erfordert eine Anpassung der Position des Echofensters sowie eine Korrektur von Zeit und Phase. Die Anpassung der Position des Echofensters ermöglicht eine erfolgreiche Aufnahme der Radardaten. Die Korrektur von Zeit und Phase ermöglicht die Bildung des erwünschten SAR-Bildes. Während die Anforderungen an die Anpassung der Position des Echofensters gering sind (in der Größenordnung einiger 100 ns) erfordert die Kalibrierung von Zeit und Phase eine wesentlich größere Genauigkeit. Hierzu sind kalibrierte Messungen sowohl von Amplitude und Phase erforderlich. Da viele SAR-Anwendungen kalibrierte Messungen sowohl in Amplitude und Phase benötigen, wäre es wünschenswert, ein Verfahren zu haben, welches die Verarbeitung von nicht-synchronen Daten in automatischer Weise ermöglicht. Der Begriff "automatisch" ist dabei derart zu verstehen, dass lediglich regulär erfasste Radardaten für die Verarbeitung benötigt werden.

Die Veröffentlichung Marc Rodriguez-Cassola et al.: "General Processing Approach for Bistatic SAR Systems: Description and Performance Analysis", 8th European Conference on Synthetic Aperture Radar, EUSAR 2010, 10. Juni 2010, Seiten 1-4 offenbart ein Verfahren zur Korrektur der Zeit- und Phasenreferenzen von nicht-synchronen SAR-Daten, die als Bild oder Bilder durch ein bistatisches oder ein multistatisches Radarsystem erfasst und bereitgestellt sind. Das Verfahren basiert auf einer Auswertung von Informationen der SAR-Daten, wobei ein innerhalb der SAR-Daten vorliegender Residual-Taktphasenfehler geschätzt und korrigiert wird. Es erfolgt eine Korrektur der Zeit- und Phasenreferenzen der empfangenen SAR-Daten durch die Verarbeitung des geschätzten Residual-Taktphasenfehlers, um eine neue Zeitreferenz zu erhalten. Anschließend wird ein neues SAR-Bild durch die Verarbeitung der neuen Zeitreferenz erzeugt, wobei eine Rekonstruktion der durch das Radar-System erfassten geometrischen Daten erfolgt. Schließlich wird der Residual-Taktphasenfehler des zuvor erzeugten SAR-Bilds erneut geschätzt.

Die Veröffentlichung Marc Rodriguez-Cassola et al.: "New processing approach and results for bistatic TerraSAR-X/F-SAR spaceborne-airborne experiments", International Geoscience and Remote Sensing Symposium IGARSS 2009, 12. Juli 2009, Seiten 11-242 offenbart ein ähnliches Vorgehen, wobei jedoch eine Zeitreferenz durch die direkte Verarbeitung eines Zeitsignals geschätzt wird. Dadurch kann auf ein Referenzbild verzichtet werden.

Die Veröffentlichung Wen-Qin Wang "GPS-Based Time&Phase Synchronization Processing for Distributed SAR", IEEE Transactions on Aerospace and Electronic Systems, Bd. 45, Nr. 3, 1. Juli 2009, Seiten 1040-1051 offenbart ein Verfahren, das GPS-synchronisierte Daten verarbeitet. Die GPS-Synchronisation wird zur Kompensation einer in den Daten auftretenden Verzerrung genutzt wird, wobei die GPS-Daten zur linearen Kompensation von Zeitreferenzen genutzt werden, wodurch eine grobe Korrektur vorgenommen ist.

Die Veröffentlichung Wen-Qin Wang "Bistatic Synthetic Aperture Radar Synchronization Processing", Radar Technology, 1. Januar 2010, Seiten 273-296 offenbart die Verarbeitung von Synchronisationsfehlern in bistatischen SAR-Daten.

Es ist Aufgabe der vorliegenden Erfindung, ein verbessertes Verfahren zur Korrektur der Zeit- und Phasenfehler von nicht-synchronen SAR-Daten anzugeben.

Diese Aufgabe wird gelöst durch ein Verfahren gemäß den Merkmalen des Patentanspruches 1. Vorteilhafte Ausgestaltungen ergeben sich aus den abhängigen Patentansprüchen.

Es wird ein Verfahren zur Korrektur der Zeit- und Phasenreferenz von nicht-synchronen SAR-Daten vorgeschlagen, wobei die nicht-synchronen SAR-Daten als Bild oder Bilder durch ein bistatisches oder multistatisches Radarsystem erfasst und bereitgestellt sind. Bei dem Verfahren wird, basierend auf einer, ausschließlichen, Auswertung von Informationen der SAR-Daten ein innerhalb der SAR-Daten vorliegender Residual-Taktphasenfehler geschätzt und korrigiert, wobei die folgenden Schritte ein- oder mehrmals iterativ durchgeführt werden:

a) Korrektur der Zeit- und Phasenreferenzen der empfangenen SAR-Daten durch die Verarbeitung des geschätzten Residual-Taktphasenfehlers zur Korrektur des geschätzten oder in einem vorhergehenden Iterationsschritt ermittelten Taktphasenfehlers, wodurch eine neue Zeitreferenz erhalten wird;
b) Erzeugung eines SAR-Bilds aus den korrigierten Radardaten durch die Verarbeitung der neuen Zeitreferenz, wobei eine Rekonstruktion der durch das Radar-System erfassten geometrischen Daten erfolgt;
c) Schätzung des Residual-Taktphasenfehlers des in Schritt b) erzeugten SAR-Bilds.

In Schritt c) wird die Schätzung des Residual-Taktphasenfehlers durch einen Vergleich mit einem Referenz-SAR-Bild, das keinen Taktphasenfehler aufweist, durchgeführt, wobei bezogen auf das Referenz-SAR-Bild eine zweidimensionale Verzerrung des in Schritt b) erzeugten SAR-Bilds ermittelt wird und wobei die Schätzung des Residual-Taktphasenfehlers durch eine Invertierung der ermittelten Verzerrung erfolgt. Die Verzerrung in Azimut-Richtung wird folgender Formel ermittelt:

$$\Delta t_{a,clock}\left(t_r,t_a\right) \approx \frac{\lambda}{2 \cdot a_2\left(t_r,t_a\right)} \cdot \Delta f_{0,clock}\left(t_r,t_a\right),$$

wobei $a_2(t_r, t_a)$ zu dem quadratischen Koeffizienten der Range-Historie des betrachteten Pixels ($t_r, t_a$) korrespondiert und erfolgt und $\Delta f_{0,clock}\left(t_r,t_a\right)$ *der* laufende Frequenzoffset ist. Die Verzerrung in Range-Richtung wird gemäß folgender Formel ermittelt:

$$\Delta t_{r,clock}\left(t_r,t_a\right) \approx \frac{\lambda}{c} \cdot \frac{\Delta\phi_{clock}\left(t_r,t_a\right)}{2\pi}.$$

Das Verfahren ermöglicht die Korrektur der Zeit- und Phasenfehler von nicht-synchronen SAR-Daten, ohne besondere Hardwareerfordernisse, wie z.B. einen expliziten Synchronisations-Link, oder die Aufzeichnung eines direkten Radarpulses zu benötigen. Stattdessen kann die Korrektur ausschließlich auf Basis der nicht-synchronen SAR-Daten erfolgen. Insbesondere erlaubt das Verfahren eine Abschätzung des Residual-Taktphasenfehlers beliebiger bistatischer SAR-Daten, wobei diese Abschätzung nur anhand der verfügbaren SAR-Daten erfolgt. Die Korrektur kann auf einfache Weise nach der Aufnahme eines SAR-Bilds erfolgen. Die Synchronisation kann durch ein das SAR-Bild aufnehmendes SAR-System (d.h. "On-Board") oder durch ein von dem SAR-System unterschiedliches Auswertesystem, z.B. "On-Ground", vorgenommen werden.

Das Verfahren ermöglicht die Korrektur mit einer hohen Genauigkeit. Die Rekonstruktion ist effizient und einsetzbar für beliebige Arten von zu überwachenden Szenarien, wie z.B. städtischen oder ländlichen Gebieten. Die Effizienz des Rekonstruktionsverfahrens liegt in der Größenordnung herkömmlicher SAR-Anwendungen.

Das Verfahren kann zur alleinigen Korrektur in nicht-kooperativen SAR-Systemen verwendet werden. Ebenso kann das Verfahren als Backup oder zu Tests in kooperativen SAR-Systemen eingesetzt werden.

In der Praxis erlaubt es die Abschätzung jeglicher residueller Zeit- und Phasenfehler, so wie ihre Korrektur in Verarbeitungschritten" wodurch geringere Anforderungen an Hardware und/oder Betriebserfordernisse von bistatischen und multistatischen Systemen gestellt werden.

Das beschriebene Verfahren wird pixelweise oder blockweise durchgeführt. Ein Block umfasst eine Mehrzahl an Pixeln.

Um die Korrektur der Zeit- und Phaseninformation durchführen zu können, ist zu Beginn des Verfahrens ein initialer Taktphasenfehler erforderlich. Dieser kann auf Basis beliebiger verfügbarer Kalibrierinformationen, falls sie zur Verfügung stehen, geschätzt werden. Kalibrierinformation sind z.B. eine Hardware Messung eines konstanten Frequenzoffsets zwischen Sender und Empfanger bzw. der Phase des direkten Signals u.s.w. Der Taktphasenfehler kann mit null initialisiert werden. Anschließend kann diese initiale Schätzung zu Korrekturzwecken der Zeit- und Phasereferenzen durchgeführt werden. Wahlweise können hierzu SAR-Rohdaten oder komprimierte Range-Daten verwendet werden.

In Schritt a) kann eine Interpolation in Range-Richtung durchgeführt werden, um eine residuelle Krümmung der Antwort eines betrachteten Radarziels zu kompensieren. Es ist ausreichend, wenn die Interpolation in einer Dimension, nämlich in Range-Richtung, durchgeführt wird.

Zur Korrektur der Zeitreferenz können folgende Schritte durchgeführt werden:

- es wird eine 1D-Fast Fourier Transformation (FFT) in Range-Richtung durchgeführt, um die Daten in einen Range-Frequenzbereich umzuwandeln,
- es wird eine Grobverschiebung (Bulk Shift) gemäß folgender Formel ermittelt:

$$q_1\left(f_r,t_a\right) = \exp\left[j \cdot f_r \cdot \frac{\lambda}{c} \cdot \Delta\phi_{clock}^1\left(\widetilde{t}_r,t_a\right)\right],$$

wobei $q_1(f_r, t_a)$ die Hauptverschiebung, j die komplexe Einheit, $f_r$ die Range-Frequenz, $\lambda$ die Wellenlänge, c die Lichtgeschwindigkeit, $\Delta\phi_{clock}^1(t_r,t_a)$ das Echofenster sind, wobei "1" einen Schritt von allgemein i Schritten darstellt,
- es wird eine, z.B. lineare oder quadratische, Interpolation geringer Ordnung durchgeführt, und
- es erfolgt eine Umwandlung der Daten in eine zweidimensionale Zeitebene mittels einer Fast Fourier Transformation (FFT) in Range-Richtung.

Zur Korrektur der Phasenfehler von zeitlich älteren Doppler-Informationen kann in Schritt a) eine Phasenkompensation durchgeführt werden. Zur Phasenkompensation der Doppler-Information wird folgendes ermittelt:

$$q_2\left(t_r,t_a\right) = \exp\left[\, j \cdot \Delta\phi_{clock}^1\left(t_r,t_a\right)\right].$$

In Schritt c) kann die Schätzung des Residual-Taktphasenfehlers auf Basis des in dem in Schritt b) erzeugten SAR-Bilds durchgeführt werden. Hierzu kann beispielsweise zur Schätzung ein Autofokus-Algorithmus verarbeitet werden. Hierzu können verschiedene, aus dem Stand der Technik bekannte, Algorithmen verwendet werden. Das Referenz-SAR-Bild kann beispielsweise durch ein monostatisches SAR-System aufgenommen sein. Die Verzerrung kann durch eine inkohärente oder kohärente Kreuzkorrelation ermittelt werden.

Zusammenfassend wird vorgeschlagen, in einem iterativen Verfahren eine automatische Schätzung und Korrektur eines Taktphasenfehlers in bistatischen oder multistatischen SAR-Daten vorzunehmen. In diesem iterativen Verfahren wird eine Korrektur der SAR-Daten für den verfügbaren Taktphasenfehler durchgeführt. Anschließend erfolgt eine Erzeugung eines (korrigierten) SAR-Bildes. In einer Rückkoppel-oder Feedbackschleife wird in dem neu erzeugten SAR-Bild erneut der verbleibende Taktphasenfehler geschätzt und mit dem neuen Schätzwert eine erneute Schätzung des Taktphasenfehlers und SAR-Bild-Erzeugung vorgenommen, usw.. Das Verfahren endet, wenn sich keine weitere Verbesserung in der Schätzung des Residual-Taktphasenfehlers ergibt. Die Schätzung des verbleibenden Taktphasenfehlers (Residual-Taktphasenfehler) kann auf alleiniger Basis der in dem neuen SAR-Bild enthaltenen Informationen oder durch einen Vergleich mit einem Referenzbild erfolgen.

Die Erfindung wird nachfolgend näher anhand von Ausführungsbeispielen in der Zeichnung erläutert. Es zeigen:

Fig. 1     ein Blockdiagramm eines bekannten nicht-synchronen bistatischen SAR-Systems, welches die zur Durchführung des erfindungsgemäßen Verfahrens benötigten SAR-Daten als Bild oder Bilder bereitstellt,

Fig. 2     ein Diagramm, das die Effekte eines nicht-synchronen Betriebs in fokussierten SAR-Bildern illustriert,

Fig. 3     ein Blockdiagramm eines ersten Ausführungsbeispiels des erfindungsgemäßen Verfahrens,

Fig. 4     ein Blockdiagramm eines zweiten Ausführungsbeispiels des erfindungsgemäßen Verfahrens,

Fig. 5     eine Darstellung einer beispielhaften Implementierung einer Zeit- und Phasenkorrektur, und

Fig. 6     ein Diagramm, das einen gemäß dem erfindungsgemäßen Verfahren geschätzten Taktphasenfehler im Vergleich zu einem gemessen Taktphasenfehler eines korrigierten SAR-Systems zeigt.

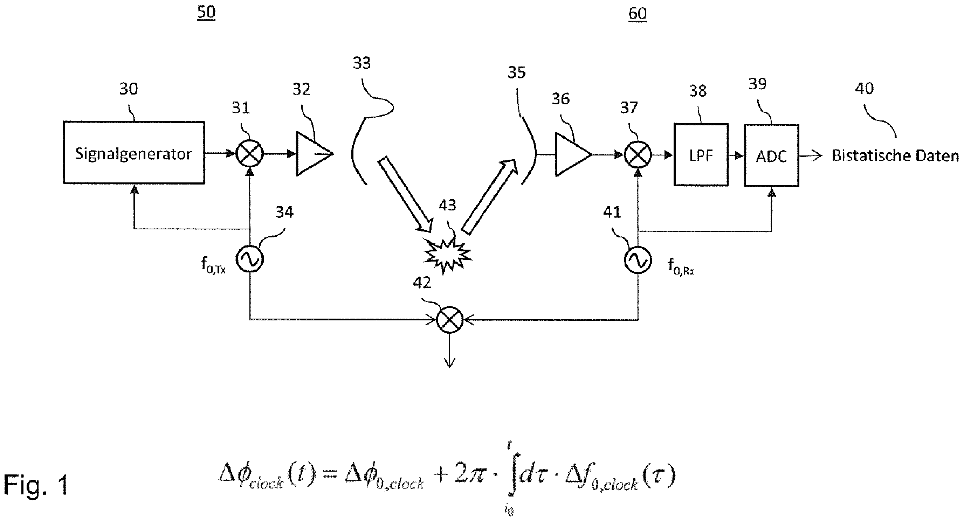

Fig. 1 zeigt ein Blockdiagramm eines bekannten nicht-synchronen SAR-Systems, das einen Sender 50 und einen Empfänger 60 umfasst. Sender 50 und Empfänger 60 sind auf unterschiedlichen Trägerplattformen ausgebildet. Trägerplattformen können Flugzeuge oder Satelliten sein. Der Sender 50 umfasst einen Signalgenerator 30, dem von einer internen Zeitreferenz 34, z.B. einem Oszillator, des Senders 50 eine Referenzfrequenz $f_{0,Tx}$ zugeführt wird. Die interne Zeitreferenz 34 wird auch als Masteruhr bzw. Master-Clock bezeichnet. Die Referenzfrequenz $f_{0,Tx}$ wird ferner einem Mischer 37 zugeführt, der zudem mit einem Ausgang des Signalgenerators 30 verbunden ist. Der Mischer 31 moduliert das von der internen Zeitreferenz 34 zugeführte Taktsignal $f_{0,Tx}$. Das modulierte Signal wird einem Verstärker 32 zugeführt, der mit seinen Ausgang mit einer Sendeantenne 33 verbunden ist. Die Signalantenne 33 sendet Radarimpulse aus, welche von einem Radarziel 43 reflektiert und von einer Antenne 35 des Empfängers 60 empfangen werden.

Die Antenne 35 ist mit einem Verstärker 36 verbunden, der das empfangene Signal einem Mischer 37 zur Demodulation mit einer von einer internen Zeitreferenz 41 bereitgestellten Referenzfrequenz $f_{0,Rx}$ zuführt. Hierzu ist ein weiterer Eingang des Mischers 37 mit der internen Zeitreferenz 41 verbunden. Die interne Zeitreferenz 41 ist mit einem Taktgenerator des Empfängers verbunden. Die interne Zeitreferenz 41 des Empfängers 60 führt die Frequenz $f_{0,Rx}$ neben dem Mischer 37 auch einem AD-Wandler 39 (ADC) zu. Ausgangsseitig ist der Mischer 37 mit einem Filter 38 (LPF) verbunden. Die gefilterten Daten werden dem Eingang des AD-Wandlers 39 zugeführt. Am Ausgang des AD-Wandlers 39 liegen damit bistatische Daten 40 vor.

Um eine Kalibrierung der durch den Empfänger 60 aufgezeichneten SAR-Daten vornehmen zu können, ist es erforderlich, den Frequenzunterschied zwischen den Frequenzen der internen Zeitreferenzen 34, 41 des Senders 50 und des Empfängers 60 zu ermitteln. Schematisch werden diese Frequenzen dem Taktsignalkombinator 42 zugeführt,

der eine Differenzphase $\Delta\varphi$ gemäß der in Fig. 1 dargestellten Formel ermittelt.

Im nachfolgenden wird das Taktfehlermodell in Verbindung mit einer bistatischen SAR-Antwort bei unterschiedlichen Zeit- und Phasereferenzen zwischen dem Sender und dem Empfänger näher beschrieben, woraus der zu ermittelnde Taktphasenfehler resultiert.

In den folgenden Gleichungen repräsentieren:

$t_r$: die Zeit in der Range-Richtung, welche auch als "schnelle" Zeit bezeichnet wird,

$t_a$: die Zeit in Azimut-Richtung, welche auch als "langsame" Zeit bezeichnet wird,

$f_a$: die Azimut-Frequenz, d.h. die Doppler-Frequenz,

$f_r$: die Range-Frequenz,

$f_0$: die zentrale Frequenz (Zentralfrequenz),

$r_0$: die Entfernung (Range) zu einem punktförmigen Radarziel,

$\lambda$: die Wellenlänge,

c: die Lichtgeschwindigkeit, und

$j = \sqrt{-1}$ die komplexe Einheit.

Der Taktphasenfehler in einem bistatischen SAR-System ist definiert als die Differenz der Master-Oszillatorphase zwischen dem Sender und dem Empfänger. Eine sehr gute Taktstabilität ist ein wichtiges Erfordernis für eine SAR-Masteruhr (d.h. den internen Zeitreferenzen 34, 41 in der Fig. 1). Bei der üblicherweise kurzen Zeitspanne zwischen dem Aussenden eines Signals und dessen Empfang ist der Taktphasenfehler in einem monostatischen SAR-System begrenzt auf Hochfrequenzkomponenten des Rauschens der Mastertaktphase, da sich kleine Frequenzen nach der Demodulation aufheben. Dieses Aufheben oder Löschen tritt jedoch nicht in bistatischen oder multistatischen SAR-Systemen auf, wo zusätzlich zu den Rauschkomponenten geringer und hoher Frequenzen andere deterministische Einflüsse auftreten. Dieser Zusammenhang ist aus dem Stand der Technik prinzipiell bekannt, sodass im Nachfolgenden nicht weiter darauf eingegangen wird.

Der Taktfehler während der Zeit der bistatischen Datenerfassung kann mit nachfolgender Gleichung ausgedrückt werden:

$$\Delta\phi_{clock}(t) = \Delta\phi_{0,clock} + 2\pi \cdot \int_{t_0}^{t} d\tau \cdot \Delta f_{0,clock}(\tau), \qquad (1)$$

worin t die absolute Zeit, $t_0$ die Startzeit, zu der die Frequenzen der Zeitreferenzen des Senders und Empfängers zum Auseinanderdriften beginnen, $\Delta f_{0,clock}(t)$ den laufenden Frequenzoffset zwischen den Sender- und Empfängerzeitreferenzen repräsentiert, wobei der Frequenzoffset lineare Terme und Terme höher als erste Ordnung des Zeitreferenzphasenfehlers umfasst. Es ist zu berücksichtigen, dass die Variable t sowohl die schnellen Zeitkomponenten $t_r$ als auch die langsamen Zeitkomponenten $t_a$ umfasst.

Alle nützlichen Frequenzen für den SAR-Betrieb können von der betreffenden Zeitreferenz 34, 41 nach entsprechenden Multiplikationen oder Divisionen in den Mischern 31, 37 abgeleitet werden. Diese Operationen, bis zu einem Skalieren von Momenten der Variablen in den betreffenden Prozessen, verändern nicht das statistische Verhalten der verschiedenen Frequenzen für den Radarbetrieb. Daher wird für $\Delta f_{0,clock}(t)$ im Folgenden angenommen, dass diese Differenzfrequenz auf die Trägerfrequenz des Radars skaliert ist.

Die bistatische SAR-Impulsantwort einschließlich des Taktphasenfehlers muss den Einfluss des Taktfehlers auf die Trägerfrequenz und die Pulswiederholzeit (Puls Repetition Frequency PRF) des Radarsystems in Betracht ziehen. Dies bedeutet,

$$h(t_r, t_a) = s_{Tx}\left(t_r - \frac{r(t_a)}{c} - \Delta t_{r,c}(t_r, t_a)\right) \cdot \exp\left[-j \cdot 2\pi \cdot \frac{r(t_a)}{\lambda} + j \cdot \Delta\phi_{clock}\right], \qquad (2)$$

worin $s_{Tx}$ das übertragene Signal ist, $r(t_a)$ zu der bistatischen Range-Historie korrespondiert, c die Ausbreitungsgeschwindigkeit des Radarsignals ist, $\lambda$ die Trägerwellenlänge ist und $\Delta t_{r,c}$ ein Residual-Rangekrümmungsfehler ist, der durch die unterschiedliche Zeitreferenzen von Sender und Empfänger eingefügt ist. Beispielsweise wird der Residual-Krümmungsfehler $\Delta t_{r,c}$ verursacht durch die Differenz in effektiven PRF-Werten des Senders und des Empfängers. Der Residual Krümmungsfehler kann angenähert werden durch

$$\Delta t_{r,c}\left(t\right) \approx \frac{\lambda}{c} \cdot \frac{\Delta \phi_{clock}\left(t\right)}{2\pi}. \qquad (3)$$

Formel (3) gibt die Verzerrung in Range-Richtung wieder, wobei davon ausgegangen wird, dass eine gemeinsame Range-Referenz zum Zeitpunkt des Startens des Echofensters gegeben ist. Der Effekt der unterschiedlichen Zeit- und Phasenreferenzen zwischen Sender und Empfänger in der bistatischen SAR-Impulsantwort besteht auf der einen Seite darin, dass der Term $\Delta t_{r,c}$ die Range-Signatur des Radarziels 43 verändert. Auf der anderen Seite modifiziert der Term $\Delta \phi_{clock}$ seine Doppler-Signatur. Dies bedeutet, solange keine Korrektur erreicht ist, ist eine SAR-Fokussierung nicht in der Lage, eine Reflexionskarte der beleuchteten Szenerie genau zu rekonstruieren.

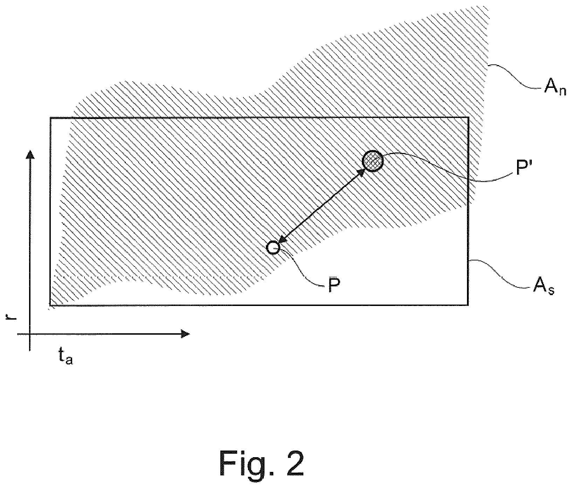

Die Taktphasenfehler verursachen somit Positions- und Phasenfehler in der fokussierten SAR-Zielantwort. Fig. 2 illustriert diesen Effekt der fehlenden Korrektur. In Fig. 2 repräsentiert das mit $A_s$ gekennzeichnete Rechteck ein synchronisiertes SAR-Bild, das in dem Range-Azimut-Koordinatensystem fokussiert ist. Die graue Fläche $A_n$ repräsentiert das verzerrte, nicht-korrigierte SAR-Bild, das auf die gleichen Koordinaten fokussiert ist. Betrachtet man die einzelnen Pixel, von denen eines exemplarisch mit P in dem korrigiertem SAR-Bild gekennzeichnet ist, so erkennt man, dass das korrespondierende Pixel P' einen Positions- und Fokussierungsfehler, verursacht durch einen Phasenfehler, aufweist. Der Fokussierungsfehler macht sich dadurch bemerkbar, dass das Pixel P' im verzerrten Bild $A_n$ eine größere Fläche einnimmt.

Nachfolgend wird das Vorgehen des erfindungsgemäßen Verfahrens beschrieben, welches auf den vorstehend beschriebenen Erkenntnissen aufbaut.

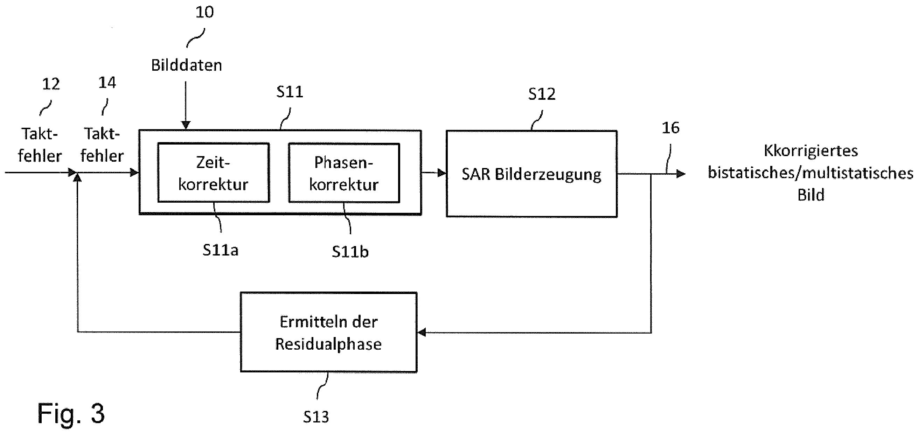

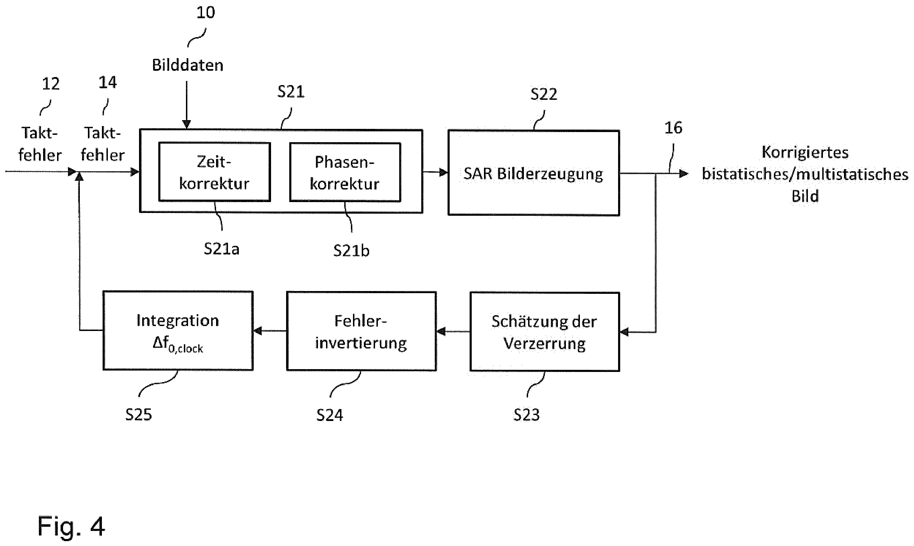

Die Inversion der oben genannten Fehler erleichtert die Möglichkeit des Schätzens des Residual-Taktphasenfehlers innerhalb der nicht-synchronen SAR-Daten. Grundsätzlich kann die Korrektur des Residual-Taktphasenfehlers auf zwei unterschiedliche Arten gelöst werden, wobei die entsprechenden Blockdiagramme in den Fig. 3 und 4 dargestellt sind. Im Ausführungsbeispiel gemäß Fig. 3 werden lediglich die zu korrigierenden bistatischen SAR-Daten verarbeitet. Dieses Vorgehen wird als "Self-Image Approach" bezeichnet. Im zweiten, in Fig. 4 gezeigten Ausführungsbeispiel erfolgt die Korrektur mit Hilfe eines fehlerfreien SAR-Bildes, das als Referenz betrachtet wird. Dieser Ansatz wird als "Reference-Image Approach" bezeichnet.

Beide Verfahren sind iterativ. Die Abschätzung des Residual-Taktphasenfehlers ermöglicht eine Verbesserung der Fokussierung vom SAR-Bild, was zudem zu einer Verbesserung der Abschätzung des Residual-Taktphasenfehlers in jedem Iterationsschritt führt. Dies bedeutet, ein besser korrigiertes SAR-Bild zeigt wenige Fehler im Vergleich zu einem fehlerfreien SAR-Bild. Die Genauigkeit der Schätzung hängt dabei von der Genauigkeit ab, mit der Phasenfehler innerhalb des fokussierten SAR-Bildes gemessen werden können.

In beiden Fällen (Fig. 3 und 4) erfolgt zunächst die Verarbeitung von verfügbaren Kalibrierinformationen bezüglich der fehlenden Taktphasenfehler. Das initiale Bereitstellen entsprechender "a priori"-Informationen bzw. Taktphasenfehler ist mit dem Bezugszeichen 12 gekennzeichnet. Unter Verwendung des "a priori"-Taktfehlers werden in Schritt S11, S21 SAR-Daten 10 bzgl. ihrer Range- und Doppler-Information korrigiert. Die Bilddaten 10 können dabei als Rohdaten (SAR-Raw) oder Range-komprimierte Daten vorliegen.

Im nächsten Schritt S12, S22 erfolgt eine bistatische SAR-Bilderzeugung unter Verwendung eines bekannten Taktphasenfehlers 14. Der Taktfehler 14 kann der "a priori"-Taktfehler 12 sein oder ein im Rahmen der Iteration ermittelter Taktfehler. Zur Bilderzeugung können beliebige, bekannte Algorithmen, welche eine hohe Genauigkeit aufweisen, verwendet werden. Ein möglicher Algorithmus ist beispielsweise in [1] beschrieben. Das Prinzip ist, dass ein Ziel auf dem Boden von unterschiedlichen Winkeln betrachtet wird, indem das Radar Echos von unterschiedlichen Positionen sendet und empfängt. Die Echos können dann kohärent auf der gleichen Position integriert werden, was die Auflösung verbessert. Bei der SAR-Verarbeitung wird die kohärente Integration effizient und genau für das ganze Bild durchgeführt.

Sobald das SAR-Bild erzeugt ist, wird eine Iterationsschleife durchlaufen. In den folgenden Schritten unterscheiden sich die oben erwähnten beiden Ansätze.

In dem, in Fig. 3 gezeigten, ersten Ausführungsbeispiel erfolgt eine Messung des Taktphasenfehlers innerhalb des im Schritt S12 erzeugten SAR-Bildes z.B. mit Hilfe des bekannten Autofokus-Algorithmus (Schritt S13). Abhängig von der Art des Autofokus-Algorithmus, kann die Messung des Residual-Taktphasenfehlers variieren. Beispielsweise kann der bekannte "Prominent Point Processing"-Algorithmus verwendet werden, der auf Messungen des Phasenfehlers abzielt, und dabei auf das Vorhandensein von hellen Zielpunkten innerhalb des Bildes abzielt. Der sog. "Map-Drift" Ansatz nutzt demgegenüber die zweite Ableitung des Phasenfehlers, d.h. zwei Integrationsschritte sind erforderlich.

In dem in Fig. 4 gezeigten, zweiten Ausführungsbeispiel erfolgt eine Messung bzw. Verarbeitung einer zweidimensionalen Verzerrungskarte in Bezug auf ein fehlerfreies Referenzbild 18 (Schritt S23). Dieses Vorgehen ist in kohärenten SAR-Systemen vorteilhaft einzusetzen, wo eine fehlerfreie, d.h. monostatische Referenz verfügbar ist. Eine kohärente Messung der Verzerrung ermöglicht darüber hinaus eine größere Genauigkeit.

Innerhalb der jeweiligen iterativen Schätzschleife, wird ein Inversionsschritt (Schritt S24 in Fig. 4) durchgeführt. Der Inversionsschritt umfasst die Umwandlung der Verzerrung zu einem Residual-Taktfehler. Der Residual-Taktfehler wird dann wiederum dem Schritt S11 bzw. S21 der Korrektur der Range- und/oder Doppler-Information zugeführt. Das genaue Vorgehen wird unten noch detaillierter erläutert. Anschließend erfolgen ein oder mehrere weitere Iterationsschritte in der beschriebenen Weise. Mit jeder weiteren Iteration wird die Schätzung des Residual-Taktfehlers kleiner bis die gewünschte bzw. erreichbare Genauigkeit erzielt ist.

Taktphasenfehler sind nicht notwendigerweise die einzige Quelle von Residual-Taktphasenfehlern in bistatischen oder multistatischen SAR-Systemen. Sie sind jedoch die einzige originale bistatische bzw. multistatische Phasenfehlerquelle, welche sich auf bereits bekannte Quellen, wie z.B. Residual-Bewegungsfehler, atmosphärische Ausbreitungsfehler, addiert. Das Vorhandensein zusätzlicher Phasenfehlerquellen verändert lediglich die Art des Inversionsmodells, welches in Betracht gezogen werden muss. Die beschriebenen Schritte des Algorithmus und seine Anwendbarkeit bleiben hingegen unverändert.

Unter Bezugnahme auf die Fig. 3 und 4 erfolgt nunmehr eine genauere Beschreibung des erfindungsgemäßen Vorgehens.

Wie beschrieben, wird davon ausgegangen, dass eine Schätzung des Taktfehlers (vergleiche das Bezugszeichen 14 in Fig. 3 und 4) verfügbar ist: $\Delta\phi_{clock}^1\left(t_r, t_a\right)$. Die Abschätzung kann z.B. entweder durch eine vorherige Messung (beispielsweise bei eventuellem Vorhandensein eines direkten Links) oder eine vorhergehende Iteration des Algorithmus bereitgestellt werden. Sobald der abgeschätzte Taktfehler 14 zur Verfügung steht, wird dieser im Schritt S11 (Fig. 3) bzw. im Schritt S21 (Fig. 4) zur Korrektur der Range und/oder Doppler-Information verwendet. Die Korrektur der Zeit- und Phasenreferenzen umfasst zwei unterschiedliche Verarbeitungsschritte:

i. Eine Korrektur der bistatischen Range, d.h. eine Verschiebung des bistatischen Echos durch $\Delta t_{r,c}(t_r, t_a)$. Eine akkurate Implementierung dieser Verschiebung erfordert eine eindimensionale Interpolation. Eine zulässige Vereinfachung für Fehler, in denen die Variation dieses Wertes innerhalb des Echofensters klein ist im Vergleich zum Inversen der übertragenen Bandbreite, ist möglich. In diesen Fehlern kann die Interpolation ersetzt werden durch eine Hauptverschiebung (Bulk Shift) mit dem Mittelwert innerhalb des Echofensters $\Delta\phi_{clock}^1\left(\widetilde{t_r}, t_a\right)$ zuzüglich einer Interpolation geringer Ordnung. Die Hauptverschiebung kann in der Domäne der Range-Frequenz nach einer eindimensionalen Range-Fast Fourier Transformation (FFT) durch eine Multiplikation mit der Phasenfunktion

$$q_1\left(f_r, t_a\right) = \exp\left[j \cdot f_r \cdot \frac{\lambda}{c} \cdot \Delta\phi_{clock}^1\left(\widetilde{t_r}, t_a\right)\right] \qquad (4)$$

durchgeführt werden. Nach dieser Phasenmultiplikation wird eine Interpolation geringer Ordnung, z.B. eine lineare oder quadratische Interpolation, durchgeführt. Anschließend überführt eine inverse Range-FFT die Daten zurück in die zweidimensionale Zeitdomäne. In dem ersten Schritt kann diese Korrektur innerhalb der Pulskompression ("Range Compression") der Daten ohne zusätzlichen Aufwand implementiert werden.

ii. eine Phasenkompensation der Form

$$q_2\left(t_r, t_a\right) = \exp\left[j \cdot \Delta\phi_{clock}^1\left(t_r, t_a\right)\right]. \qquad (5)$$

Nach i-1 Iterationen wird der aktualisierte Taktphasenfehler zu $\Delta\phi_{clock}^i\left(t_r, t_a\right)$, welcher in Schritt S11 bzw. S21 benutzt werden kann $\Delta\phi_{clock}^1\left(t_r, t_a\right)$ durch $\Delta\phi_{clock}^i\left(t_r, t_a\right)$ zu ersetzen und die originale Datenmatrix zu korrigieren. Wenn der Residualfehler gering ist, kann die Korrektur auf dem SAR-Bild nach einem Azimut-Defokussierungsschritt erfolgen. D.h. auf sog. "Range Compressed" und "Range-Cell-Migration-Corrected-Data". Für diese Fälle ist eine differenzielle Korrektur ( $\Delta\phi_{clock}^i\left(t_r, t_a\right) - \Delta\phi_{clock}^{i-1}\left(t_r, t_a\right)$ ) bevorzugt.

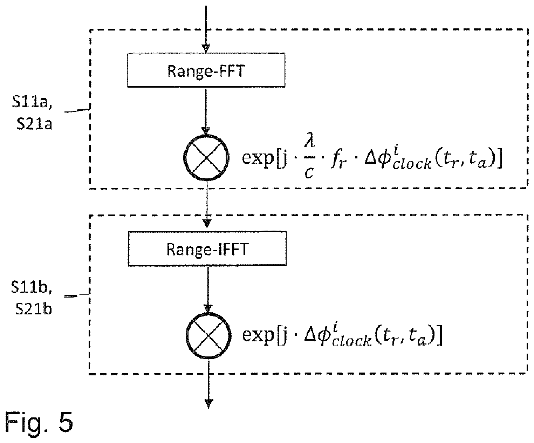

Eine beispielhafte Implementierung der Korrektur der Zeitreferenz (Teilschritt S11a bzw. S21a der Schritte S11 bzw. S21) und der Korrektur der Phasenreferenz (Teilschritt S11b bzw. S21b der Schritte S11 bzw. S21) ist in Fig. 5 dargestellt.

Nach der Korrektur der Zeit- und Phasenreferenzen wird in Schritt S12 (Fig. 3) bzw. Schritt S22 (Fig. 4) das bistatische SAR-Bild erzeugt. Hierzu können beliebige Bilderzeugungsalgorithmen benutzt werden, welche Genauigkeitsanforderungen der Applikation erfüllen. Beispielsweise kann hierzu der in [1] beschriebene Algorithmus verwendet werden.

Nach der SAR-Bilderzeugung unterscheiden sich die Vorgehensweisen von Fig. 3 und 4, sodass diese im Folgenden getrennt beschrieben werden.

Zunächst wird auf das Vorgehen in Fig. 3 Bezug genommen. Bei dem in Fig. 3 gezeigten Vorgehen ("Self-Image-Approach") werden lediglich die empfangenen bistatische SAR-Daten verarbeitet. Zum Ermitteln der Residual-Phase in Schritt S13 kann z.B. ein an sich bekannter Autofokus-Algorithmus verwendet werden. Abhängig von dem verwendeten Algorithmus ist die Qualität der Schätzung des noch im SAR-Bild enthaltenen Residual-Taktfehlers. Die Wahl des Autofokus-Algorithmus kann davon abhängen, welche Bilddaten in dem SAR-Bild enthalten sind. Die Messung kann die Messung des Phasenfehlers selbst bezwecken, wie dies beispielsweise mittels des bekannten "Prominent Point Processing" (PPA)-Algorithmus erfolgt. Bei diesem Algorithmus wird ein bekannter Punkt in dem SAR-Bild genutzt, dessen Position beispielsweise durch PPS oder eine andere Methode bekannt ist. Andere bekannte Verfahren sind der "Phase Gradient" (PGA)"-Algorithmus der "Local Contrast Maximization" (CMA)"-Algorithmus oder der "Map-Drift" (MDA)"-Algorithmus. Die funktionalen Abhängigkeiten in der Inversion des Taktphasenfehlers hängen von der Klasse des verwendeten Autofokus-Algorithmus ab. Darüber hinaus hängt die Inversion von funktionalen Abhängigkeiten und dem ausgewählten Schätzer ab, was abhängig von dem System und der Applikation sein kann. Das Vorgehen ist dem Fachmann prinzipiell bekannt, sodass daher keine genauere Beschreibung erfolgt.

Bei der in Fig. 4 gezeigten Variante wird davon ausgegangen, dass ein fehlerfreies Referenzbild 18 zur Verfügung steht. In der Iterationsschleife besteht der erste Schritt darin, eine zweidimensionale Verzerrungskarte des bistatischen SAR-Bildes das in Schritt S22 erzeugt wurde, zu erstellen (Schritt S23). Die Verzerrung kann mehrere Pixel in Range- und Azimut-Richtung umfassen, welche grundsätzlich jede verfügbare Kohärenz zwischen dem Referenzbild und dem SAR-Bild aus Schritt S22 zerstört. Die Verzerrung kann in diesem Fall unter Verwendung einer kohärenten Kreuzkorrelation gemessen werden. Es ist zu berücksichtigen, dass ein Verfahren, das auf der Schätzung der Verzerrung zwischen den zwei Bildern basiert, stark von der beobachteten Geometrie der zwei Bilder abhängt. Dies bedeutet, die beiden Bilder müssen nah genug zueinander sein, sodass diese Verzerrung gemessen werden kann, unter Nutzung einer Amplitudeninformation oder einer bevorzugten komplexen Information. Ein großes Signal-Rausch-Verhältnis (Signal-to-Noise-Ratio, SNR) oder eine Kohärenz zwischen den Bildern ist nicht erforderlich, verbessert aber die Schätzung der "Co-Registration"-Offsets.

Der Vorteil dieses Verfahrens, verglichen mit dem in Verbindung mit Fig. 3 beschriebenen Vorgehens, liegt auf der Hand. Auf der einen Seite können in der Verzerrungsmessung nicht nur Punkte, sondern auch ausgedehnte und sogar verteilte Radarziele, verwendet werden, wenn beide Bilder kohärent sind, wodurch die Qualität und Robustheit des Verfahrens steigt.

Die Verzerrungswerte, ausgedrückt als Funktion des Taktfrequenzfehlers, können wie folgt berechnet werden, wobei

$$\Delta t_{a,clock}(t_r, t_a) \approx \frac{\lambda}{2 \cdot a_2(t_r, t_a)} \cdot \Delta f_{0,clock}(t_r, t_a) \qquad (6)$$

die Verzerrung in Azimut-Richtung und

$$\Delta t_{r,clock}(t_r, t_a) \approx \frac{\lambda}{c} \cdot \frac{\Delta \phi_{clock}(t_r, t_a)}{2\pi} \qquad (7)$$

die Verzerrung in Range-Richtung ist. Dabei korrespondiert $a_2(t_r, t_a)$ zu dem quadratischen Koeffizienten der Range-Historie des durch den Radar-Puls beleuchteten Ziels am Pixel $(t_r, t_a)$. In einer herkömmlichen SAR-Anwendung, wo eine lineare Geometrienäherung gilt (z.B. bei Flugzeug-gestützten SAR-System und einem Satelliten-gestützten SAR-System mit mittlerer Auflösung), wird diese Komponente üblicherweise angenähert als

$$a_2(t_r, t_a) \approx \frac{v_e^2(t_r, t_a)}{2 \cdot r_0(t_r)}. \qquad (8)$$

Dabei ist $v_e$ die effektive Geschwindigkeit.

Die Gleichungen (6) und (7) zeigen funktionale Abhängigkeiten zwischen der Verzerrungskarte und dem Taktphasenfehler. Die Fehlerinvertierung (Schritt S24) berücksichtigt diese Abhängigkeiten.

Sobald die Iteration des Residual-Taktphasenfehlers ermittelt wurde, beginnen die Verfahren bei den Schritten S11 bzw. S21 von neuem. Als Taktfehler für die Korrektur der Zeit- und Phasenreferenz wird dabei der in der Iterationsschleife ermittelte Taktfehler verwendet. In beiden Fällen stoppt die Iteration, wenn sich keine weitere Verbesserung in der Schätzung des Residual-Taktphasenfehlers ergibt. Das Ergebnis ist das synchronisierte bistatische oder multistatische Bild 16.

In einem herkömmlichen System, wie z.B. TanDEM-X ist es üblich, dass die Verzerrung aufgrund eines Taktphasenfehlers mit einer größeren Genauigkeit in Azimut-Richtung gemessen werden können als in Range-Richtung. In diesem Fall kann die Inversion lediglich auf die Azimut-Verzerrungsschätzung $\widetilde{\Delta t}_{a,clock}$ angewendet werden, wodurch sich die Komplexität mit einem vernachlässigbaren Fehler in der Genauigkeit der Schätzung reduziert. In diesem beispielhaften Fall kann eine LMS (Least Mean Squares)-Schätzung von $\widetilde{\Delta f}_{0,clock}(t_a)$ unter Verwendung von $\widetilde{\Delta t}_{a,clock}(t_r, t_a)$ durchgeführt werden, gefolgt von einem Integrationsschritt. Falls Messungen der Range- und Azimut-Offsets verfügbar sind, können die unabhängigen Schätzungen kombiniert werden, um die Qualität der endgültigen Schätzung zu verbessern.

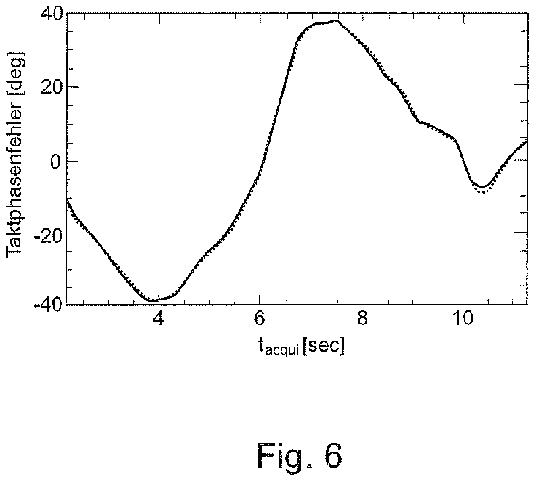

Fig. 6 zeigt ein Beispiel der Schätzung, welches durch das in Fig. 4 gezeigte Verfahren erzielt wurde. Die bistatischen SAR-Daten sind einer TanDEM-X Erfassung entnommen. Bei dieser erfolgt eine gleichzeitige Erfassung von monostatischen SAR-Daten, welche als Referenzdaten verwendet werden können, und Messungen von den direkten Links, die für eine unabhängige Verifikation verfügbar sind. Die gestrichelte Linie zeigt den mit der beschriebenen Methode geschätzten Taktphasenfehler, der gemessene Taktphasenfehler ist durch die durchgezogene Linie dargestellt. Beide Linien zeigen eine gute Übereinstimmung, was die Leistungsfähigkeit des vorgeschlagenen Ansatzes demonstriert.

Bezugszeichenliste

| | |
|---|---|
| 10 | Bilddaten |
| 12 | A priori Phasenfehler |
| 14 | Phasenfehler |
| 16 | korrigiertes Bild |
| | |
| 30 | Signalgenerator |
| 31 | Mischer |
| 32 | Verstärker |
| 33 | Sendeantenne |
| 34 | interne Zeitreferenz |
| 35 | Empfangsantenne |
| 36 | Verstärker |
| 37 | Signalkombination |
| 38 | Filter |
| 39 | AD-Wandler |
| 40 | bistatische Daten |
| 41 | interne Zeitreferenz des Empfängers |
| 42 | Taktsignalkombination |
| 43 | Radarziel |
| $A_s$ | Bildbereich eines korrigierten SAR-Bilds |
| $A_n$ | Bildbereich eines nicht korrigierten SAR-Bilds |
| | |
| S11 | Korrekturschritt |
| S11a | Zeitkorrektur |
| S11b | Phasenkorrektur |
| S12 | Bilderzeugungsschritt |
| S13 | Residualphasenermittlungsschritt |
| S21 | Korrekturschritt |

S21a    Zeitkorrektur
S21b    Phasenkorrektur
S22     Bilderzeugungsschritt
S23     Verzerrungsschätzung
S24     Fehlerinvertierung
S25     Integrationsschritt

Referenzen

[1] M. Rodriguez-Cassola, P. Prats, G. Krieger, und A. Moreira, "Efficient timedomain image formation with precise topography accommodation for general bistatic SAR configurations", IEEE Transactions on Aerospace and Electronic Systems, vol. 24, no. 3, pp. 218-223, Oct. 2011

**Patentansprüche**

1. Verfahren zur Schätzung und Korrektur der Zeit- und Phasenreferenzen von nicht-synchronen SAR-Daten, wobei die nicht-synchronen SAR-Daten als Bild oder Bilder durch ein bistatisches oder ein multistatisches Radarsystem erfasst und bereitgestellt sind, bei dem
basierend auf einer, ausschließlichen Auswertung von Informationen der SAR-Daten ein innerhalb der SAR-Daten vorliegender Residual-Taktphasenfehler geschätzt und korrigiert wird, wobei die nachfolgenden Schritte ein- oder mehrmals iterativ durchgeführt werden:

   a) Korrektur der Zeit- und Phasenreferenzen (S11; S21) der empfangenen SAR-Daten durch die Verarbeitung des geschätzten Residual-Taktphasenfehlers zur Korrektur des geschätzten oder in einem vorhergehenden Iterationsschritt ermittelten Taktphasenfehlers, wodurch eine neue Zeitreferenz erhalten wird;
   b) Erzeugung eines SAR-Bilds (S12; S22) durch die Verarbeitung der neuen Zeitreferenz, wobei eine Rekonstruktion der durch das Radar-System erfassten geometrischen Daten erfolgt;
   c) Schätzung des Residual-Taktphasenfehlers (S13; S23, S24, S25) des in Schritt b) erzeugten SAR-Bilds;

**dadurch gekennzeichnet, dass**

   - in Schritt c) die Schätzung des Residual-Taktphasenfehlers durch einen Vergleich mit einem Referenz-SAR-Bild, das keinen Taktphasenfehler aufweist, durchgeführt wird, wobei bezogen auf das Referenz-SAR-Bild eine zweidimensionale Verzerrung des in Schritt b) erzeugten SAR-Bilds ermittelt wird und wobei die Schätzung des Residual-Taktphasenfehlers durch eine Invertierung der ermittelten Verzerrung erfolgt;
   - die Verzerrung in Azimut-Richtung gemäß folgender Formel ermittelt wird:

$$\Delta t_{a,clock}\left(t_r, t_a\right) \approx \frac{\lambda}{2 \cdot a_2\left(t_r, t_a\right)} \cdot \Delta f_{0,clock}\left(t_r, t_a\right)$$

   wobei $a_2(t_r, t_a)$ zu dem quadratischen Koeffizienten der Range-Historie des betrachteten Pixels ($t_r$, $t_a$) korrespondiert und $\Delta f_{0,clock}\left(t_r, t_a\right)$ der laufende Frequenzoffset ist; und
   - die Verzerrung in Range-Richtung gemäß folgender Formel ermittelt wird:

$$\Delta t_{r,clock}\left(t_r, t_a\right) \approx \frac{\lambda}{c} \cdot \frac{\Delta \phi_{clock}\left(t_r, t_a\right)}{2\pi}$$

   wobei $\Delta \phi_{clock}\left(t_r, t_a\right)$ ein Echofenster ist.

2. Verfahren nach Anspruch 1, bei dem in Schritt a) eine Interpolation in Range-Richtung durchgeführt wird, um die residuelle Krümmung der Antwort eines betrachteten Ziels zu kompensieren.

3. Verfahren nach Anspruch 1, bei dem zur Interpolation der Range-Information

- eine Grobverschiebung "bulk shift" gemäß folgender Formel ermittelt wird:

$$q_1\left(f_r,t_a\right) = \exp\left[j \cdot f_r \cdot \frac{\lambda}{c} \cdot \Delta\phi_{clock}^1\left(\tilde{t}_r,t_a\right)\right]$$

wobei $q_1(f_r,\ t_a)$ die Grobverschiebung, j die komplexe Einheit, $f_r$ die Range-Frequenz, $\lambda$ die Wellenlänge und c die Lichtgeschwindigkeit sind,
- eine lineare oder quadratische Interpolation durchgeführt wird, und
- eine Umwandlung der Daten in eine zweidimensionale Zeitebene mittels einer Fast Fourier Transformation in Range-Richtung erfolgt.

4. Verfahren nach einem der vorhergehenden Ansprüche, bei dem in Schritt a) eine Phasenkompensation zur Korrektur der Phasenreferenz durchgeführt wird.

5. Verfahren nach Anspruch 4, bei dem zur Phasenkompensation der Doppler-Information folgendes ermittelt wird:

$$q_2\left(t_r,t_a\right) = \exp\left[j \cdot \Delta\phi_{clock}^1\left(t_r,t_a\right)\right],$$

wobei $\Delta\phi_{clock}^1(t_r,t_a)$ das Echofenster ist.

6. Verfahren nach einem der vorhergehenden Ansprüche, bei dem zur Schätzung ein Autofokus-Algorithmus verarbeitet wird.

7. Verfahren nach einem der vorhergehenden Ansprüche, bei dem das Referenz-SAR-Bild durch ein monostatisches SAR-System aufgenommen ist.

8. Verfahren nach einem der vorhergehenden Ansprüche, bei dem die Verzerrung durch eine inkohärente oder kohärente Kreuzkorrelation ermittelt wird.

**Claims**

1. A method for estimating and correcting the time and phase references of nonsynchronous SAR data, the nonsynchronous SAR data being captured and provided as an image or images by a bistatic or multistatic radar system, wherein based on an exclusive analysis of information of the SAR data, a residual clock-phase error within the SAR data is estimated and corrected, wherein the following steps are performed iteratively once or several times:

a) Correction of the time and phase references (S11; S21) of the received SAR data by processing the estimated residual clock-phase error for correcting the estimated clock phase error or that has been determined in a previous iterative step, whereby a new time reference is obtained;
b) Generation of an SAR image (S12; S22) by processing the new time reference, a reconstruction of the geometric data captured by the radar system taking place in the process;
c) Estimation of the residual clock-phase error (S13; S23, S24, S25) of the SAR image generated at step b);

**characterized in that**

- in step c), the estimation of the residual clock-phase error is performed by way of a comparison with a reference SAR image that does not have a clock-phase error, a two-dimensional distortion of the SAR image generated at step b) being determined with regard to the reference SAR image and the estimation of the residual clock-phase error being carried out by inverting the determined distortion;
- the distortion in the azimuth direction is determined in accordance with the following formula:

$$\Delta t_{a,clock}\left(t_r,t_a\right) \approx \frac{\lambda}{2 \cdot a_2\left(t_r,t_a\right)} \cdot \Delta f_{0,clock}\left(t_r,t_a\right)$$

wherein $a_2(t_r, t_a)$ corresponds to the quadratic coefficient of the range history of the particular pixel $(t_r, t_a)$ and $\Delta f_{0,clock}(t_r,t_a)$ is the current frequency offset; and

- the distortion in the range direction is determined in accordance with the following formula:

$$\Delta t_{r,clock}\left(t_r,t_a\right) \approx \frac{\lambda}{c} \cdot \frac{\Delta \phi_{clock}\left(t_r,t_a\right)}{2\pi}$$

wherein $\Delta \phi_{clock}(t_r,t_a)$ is an echo window.

2. The method according to claim 1, wherein in step a) an interpolation is performed in the range direction in order to compensate for the residual curvature of the response of a particular target.

3. The method according to claim 1, wherein in order to interpolate the range information

- a bulk shift is determined in accordance with the following formula:

$$q_1(f_r t_a) = \exp\left[j \cdot f_r \cdot \frac{\lambda}{c} \cdot \Delta \phi_{clock}^1(\tilde{t}_r t_a)\right]$$

wherein $q_1(f_r, t_a)$ is the bulk shift, j is the complex unit, $f_r$ is the range frequency, $\lambda$ is the wavelength, c is the speed of light,
- a linear or quadratic interpolation is carried out, and
- a conversion of the data into a two-dimensional time level is performed by means of a fast Fourier transform in the range direction.

4. The method according to one of the afore-mentioned claims, wherein in step a) a phase compensation is performed for correcting the phase reference.

5. The method according to claim 4, wherein the following is determined for phase compensation of the Doppler information:

$$q_2\left(t_r,t_a\right) = \exp\left[j \cdot \Delta \phi_{clock}^1\left(t_r,t_a\right)\right],$$

wherein $\Delta \phi_{clock}^1(t_r,t_a)$ is the echo window.

6. The method according to one of the afore-mentioned claims, wherein an auto-focus algorithm is processed for the estimation.

7. The method according to one of the afore-mentioned claims, wherein the reference SAR image is captured by a mono static SAR system.

8. The method according to one of the afore-mentioned claims, wherein the distortion is determined by an incoherent or coherent cross-correlation.

**Revendications**

1. Procédé pour l'estimation et la correction des références de temps et de phase de données SAR non synchrones, où les données SAR non synchrones sont capturées et mises à disposition sous forme d'image ou d'images par un système radar bistatique ou multistatique, où

une erreur de phase d'horloge résiduelle présente dans les données SAR est estimée et corrigée en se fondant sur une analyse exclusive d'informations provenant des données SAR, où les étapes suivantes sont exécutées itérativement une ou plusieurs fois :

a) correction des références de temps et de phase (S11 ; S21) des données SAR reçues par le traitement de l'erreur de phase d'horloge résiduelle estimée afin de corriger l'erreur de phase d'horloge estimée ou bien déterminée lors d'une itération précédente, de sorte qu'une nouvelle référence de temps est obtenue ;

b) génération de l'image SAR (S12 ; S22) par le traitement de la nouvelle référence de temps, lors de laquelle s'effectue une reconstruction des données géométriques capturées par le système radar ;

c) l'estimation de l'erreur de phase d'horloge (S13 ; S23, S24, S25) de l'image SAR générée lors de l'étape b) ;

**caractérisé en ce que**

- lors de l'étape c), l'estimation de l'erreur de phase d'horloge résiduelle est réalisée par comparaison avec une image SAR de référence qui ne présente pas d'erreur de phase d'horloge, lors de laquelle une distortion bidimensionnelle de l'image SAR générée lors de l'étape b) est déterminée en se référant à l'image SAR de référence et lors de laquelle l'estimation de l'erreur de phase d'horloge résiduelle s'effectue par une inversion de la distortion déterminée ;

- la distortion dans la direction de l'azimut étant déterminée conformément à la formule suivante :

$$\Delta t_{a,clock}\left(t_r,t_a\right) \approx \frac{\lambda}{2 \cdot a_2\left(t_r,t_a\right)} \cdot \Delta f_{0,clock}\left(t_r,t_a\right)$$

où $a_2(t_r, t_a)$ correspond au coefficient du second degré de l'historique de portée du pixel considéré $(t_r, t_a)$ et $\Delta f_{0,clock}(t_r, t_a)$ est le décalage de fréquence actuel ; et

- la distortion dans la direction de portée est déterminée conformément à la formule suivante :

$$\Delta t_{r,clock}\left(t_r,t_a\right) \approx \frac{\lambda}{c} \cdot \frac{\Delta \phi_{clock}\left(t_r,t_a\right)}{2\pi}$$

où $\Delta \phi_{clock}(t_r, t_a)$ est une fenêtre d'écho.

2. Procédé selon la revendication 1, dans lequel une interpolation dans la direction de portée est effectuée lors de l'étape a) afin de compenser pour la courbure résiduelle de la réponse d'une cible considérée.

3. Procédé selon la revendication 1, dans lequel, pour l'interpolation de l'information de portée

-- un déplacement grossier « bulk shift » est déterminé conformément à la formule suivante :

$$q_1(f_r t_a) = \exp\left[j \cdot f_r \cdot \frac{\lambda}{c} \cdot \Delta \phi^1_{clock}(\tilde{t}_r t_a)\right]$$

où $q_1(f_r, t_a)$ est le déplacement grossier, j est l'unité complexe, $f_r$ est la fréquence de portée, $\lambda$ est la longueur d'onde, c est la vitesse de la lumière,

- une interpolation linéaire ou du second degré est effectuée, et
- une conversion des données en un plan temporel bidimensionnel est réalisé au moyen d'une transformation de Fourier rapide dans la direction de portée.

4. Procédé selon l'une des revendications précédentes, dans lequel une compensation de phase est réalisée lors de l'étape a) pour la correction de la référence de phase.

5. Procédé selon la revendication 4, dans lequel l'équation suivante est déterminée pour la compensation de phase de l'information Doppler :

$$q_2\left(t_r,t_a\right) = \exp\left[\, j \cdot \Delta \phi_{clock}^1\left(t_r,t_a\right)\right],$$

où $\Delta \phi_{clock}{}^1(t_r,t_a)$ est la fenêtre d'écho.

6. Procédé selon l'une des revendications précédentes, dans lequel un algorithme d'autofocalisation est traité pour l'estimation.

7. Procédé selon l'une des revendications précédentes, dans lequel l'image SAR de référence est capturée par un système SAR monostatique.

8. Procédé selon l'une des revendications précédentes, dans lequel la distortion est déterminée par une corrélation croisée incohérente ou cohérente.

EP 2 843 439 B1

Fig. 1

$$\Delta\phi_{clock}(t) = \Delta\phi_{0,clock} + 2\pi \cdot \int_{t_0}^{t} d\tau \cdot \Delta f_{0,clock}(\tau)$$

Fig. 2

**10** Bilddaten

**12** Takt-fehler  **14** Takt-fehler

**S11**

| Zeit-korrektur | Phasen-korrektur |

**S11a**  **S11b**

**S12** SAR Bilderzeugung

**16** Kkorrigiertes bistatisches/multistatisches Bild

Ermitteln der Residualphase

**S13**

Fig. 3

Fig. 4

EP 2 843 439 B1

Fig. 5

$$\text{S11a, S21a}$$

Range-FFT

$$\otimes \quad \exp[j \cdot \frac{\lambda}{c} \cdot f_r \cdot \Delta\phi^i_{clock}(t_r, t_a)]$$

$$\text{S11b, S21b}$$

Range-IFFT

$$\otimes \quad \exp[j \cdot \Delta\phi^i_{clock}(t_r, t_a)]$$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARC RODRIGUEZ-CASSOLA et al.** General Processing Approach for Bistatic SAR Systems: Description and Performance Analysis. *8th European Conference on Synthetic Aperture Radar, EUSAR 2010,* 10. Juni 2010, 1-4
- **MARC RODRIGUEZ-CASSOLA et al.** New processing approach and results for bistatic TerraSAR-X/F-SAR spaceborne-airborne experiments. *International Geoscience and Remote Sensing Symposium IGARSS 2009,* 12. Juli 2009, 11-242
- GPS-Based Time&Phase Synchronization Processing for Distributed SAR. *IEEE Transactions on Aerospace and Electronic Systems,* 01. Juli 2009, vol. 45 (3), 1040-1051
- **WEN-QIN WANG.** Bistatic Synthetic Aperture Radar Synchronization Processing. *Radar Technology,* 01. Januar 2010, 273-296
- **M. RODRIGUEZ-CASSOLA ; P. PRATS ; G. KRIEGER ; A. MOREIRA.** Efficient timedomain image formation with precise topography accommodation for general bistatic SAR configurations. *IEEE Transactions on Aerospace and Electronic Systems,* Oktober 2011, vol. 24 (3), 218-223